# EUROPÄISCHE PATENTANMELDUNG

(11) **EP 3 733 444 A1**
(43) Veröffentlichungstag der Anmeldung: **04.11.2020**
(21) Anmeldenummer: 20167181.5
(22) Anmeldetag: 31.03.2020
(51) Int. Cl.: B60L 58/15, B60L 58/16, B60L 58/13, B60L 58/24

(54) **VERFAHREN ZUM LADEN EINER TRAKTIONSBATTERIE EINES ELEKTRISCH ANGETRIEBENEN KRAFTFAHRZEUGS**

(30) Priorität: 29.04.2019 DE 102019206125
(71) Anmelder: VOLKSWAGEN AG, 38440 Wolfsburg (DE)
(72) Erfinder: BÖTTGER, Dr. Matthias, 38102 Braunschweig (DE)
(74) Vertreter: FDST Patentanwälte

(57) **Zusammenfassung**

Die Erfindung betrifft ein Verfahren zum Laden einer Traktionsbatterie (2) eines elektrisch angetriebenen Kraftfahrzeugs (4), bei dem ein erster Soll-Wert (S₁) für einen ersten Batterieladezustand (SOC₁) für einen Fahrtbeginn des Kraftfahrzeugs (4) vorgegeben wird, bei dem die Traktionsbatterie, sofern deren Batterieladezustand (SOCᵥ) kleiner als ein zweiter Soll-Wert (S₂) ist, zur Vermeidung von Alterungsprozessen in einem ersten Ladevorgang (L₁) auf einen dem zweiten Soll-Wert (S₂) entsprechenden zweiten Batterieladezustand (SOC₂) geladen wird, welcher kleiner ist als der erste Batterieladezustand (SOC₁), und bei dem die Traktionsbatterie (2) in einem zweiten Ladevorgang (L₂) auf den ersten Batterieladezustand (SOC₁) geladen wird, wobei der Startzeitpunkt (t_{S}) des zweiten Ladevorgangs (L₂) in Abhängigkeit eines bestimmten Abfahrtszeitpunkt (t_{A}), des ersten Soll-Wertes (S₁) und des zweiten Soll-Wertes (S₂) eingestellt wird, oder wobei der zweite Ladevorgang (L₂) aufgrund eines Start-Signals (S) gestartet wird, welches infolge einer Interaktion des Benutzers mit einem Endgerät (8) von diesem ausgegeben wird. Des Weiteren betrifft die Erfindung eine Ladevorrichtung (10) zum Laden der Traktionsbatterie (2) gemäß dem Verfahren sowie ein Kraftfahrzeug (4) mit einer solchen Ladevorrichtung (10).

## Beschreibung

Die Erfindung betrifft ein Verfahren zum Laden einer Traktionsbatterie eines elektrisch angetriebenen Kraftfahrzeugs. Des Weiteren betrifft die Erfindung eine Ladevorrichtung sowie ein Kraftfahrzeug mit einer solchen.

Ein elektrisch angetriebenes Kraftfahrzeug weist typischerweise eine Traktionsbatterie auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle) oder ein Plug-In-Hybridfahrzeug (PHEV, plug-in hybrid electric vehicle) zu verstehen.

Bei einer solchen Traktionsbatterie finden typischerweise irreversible Alterungsprozesse statt, welche nachteilig in einer Verringerung der Kapazität und/oder der maximal erbringbaren Leistung der Traktionsbatterie resultieren.

Hierbei wird die sog. kalendarische Alterung der Traktionsbatterie insbesondere durch die Temperatur der Traktionsbatterie sowie durch deren Batterieladezustand (state of charge, SOC) beeinflusst. So erfolgen die Alterungsprozesse bei einer vergleichsweise hohen Temperatur der Traktionsbatterie und/oder bei vergleichsweise hohem Batterieladezustand schneller als bei hierzu kleineren Temperaturen bzw. kleinerem Batterieladezustand. Beispielsweise wird das sogenannte "Solid Electrolyte Interphase" (SEI), also eine passivierend wirkende Grenzschicht zwischen der Anode und dem Elektrolyt der Traktionsbatterie, aufgrund der Zersetzung des Elektrolyts bei hohen Temperaturen und/oder bei hohem Batterieladezustand vergleichsweise schnell gebildet.

Einerseits sind solche Alterungsprozesse nachteilig für eine Lebensdauer (Verwendungsdauer) der Traktionsbatterie, andererseits ist von einem Benutzer des Kraftfahrzeugs oftmals eine hohe Reichweite zu Fahrtbeginn, und damit einhergehend ein hoher Batterieladezustand, erwünscht.

Der Erfindung liegt die Aufgabe zugrunde, einen geeigneten Ladevorgang für eine Traktionsbatterie eines elektrisch angetriebenen Kraftfahrzeugs anzugeben. Insbesondere soll eine Alterung der Traktionsbatterie vermieden oder zumindest zu verzögert und/oder die Traktionsbatterie möglichst auf einen vom Benutzer gewünschten Batterieladezustand geladen werden. Weiterhin soll eine Ladevorrichtung zum Laden der Traktionsbatterie gemäß dem Verfahren sowie ein Kraftfahrzeug mit einer solchen Ladevorrichtung angegeben werden.

Bezüglich des Verfahrens wird die Aufgabe erfindungsgemäß gelöst durch die Merkmale des Anspruchs 1. Hinsichtlich der Ladevorrichtung wird die Aufgabe mit den Merkmalen des Anspruchs 5 und bezüglich des Kraftfahrzeugs mit den Merkmalen des Anspruchs 6 erfindungsgemäß gelöst. Vorteilhafte Ausgestaltungen und Weiterbildungen sind Gegenstand der Unteransprüche. Dabei gelten die Ausführungen im Zusammenhang mit dem Verfahren sinngemäß auch für die Ladevorrichtung sowie für das Kraftfahrzeug und umgekehrt.

Das Verfahren ist zum Laden einer Traktionsbatterie eines elektrisch angetriebenen Kraftfahrzeugs vorgesehen und geeignet. Hierbei wird ein erster Soll-Wert für einen ersten Batterieladezustand vorgegeben, welchen die Traktionsbatterie zu einem (zukünftigen) Fahrtbeginn des Kraftfahrzeugs aufweisen soll. Insbesondere wird der erste Soll-Wert dabei von einem Benutzer vorgegeben. Alternativ hierzu ist der erste Soll-Wert beispielsweise an einer Ladevorrichtung, welche das Laden der Traktionsbatterie steuert, hinterlegt oder wird anhand einer Eingabe des Benutzers, beispielsweise einer vom Benutzer vorgegebenen Reichweite des Kraftfahrzeugs, von der Ladevorrichtung ermittelt und anschließend vorgegeben. Weiter alternativ wird der erste Soll-Wert von einer weiteren fahrzeugexternen oder fahrzeuginternen Vorrichtung ermittelt, der Ladevorrichtung übermittelt und anschließend vorgegeben. So wird der erste Soll-Wert beispielsweise von einem Backend eines Navigationssystems anhand einer vorgegebenen Route und einer hierfür notwendigen Energiemenge bestimmt und an die Ladevorrichtung übermittelt.

Die Traktionsbatterie wird, sofern deren Batterieladezustand beim Verbinden mit einer Ladestation kleiner als ein zweiter Soll-Wert ist, in einem ersten Ladevorgang auf einen zweiten Batterieladezustand geladen, welcher zweite Batterieladezustand dem zweiten Soll-Wert entspricht. Vorzugsweise erfolgt der erste Ladevorgang unmittelbar nach dem Anschließen der Traktionsbatterie an die Ladestation, also zeitlich direkt auf das Anschließen der Traktionsbatterie an die Ladestation folgend. Die Ladestation ist beispielsweise eine Ladesäule oder eine sogenannte Wall-Box, wobei die Ladestation eine zum Laden der Traktionsbatterie geeignete Ladespannung bzw. einen hierzu geeigneten Ladestrom bereitstellt oder bereitstellen kann.

In einem weiteren Schritt des Verfahrens wird die Traktionsbatterie in einem zweiten Ladevorgang auf den dem ersten Soll-Wert entsprechenden ersten Batterieladezustand geladen. Die Traktionsbatterie wird also im Zuge des zweiten Ladevorgangs vom zweiten Batterieladezustand auf den ersten Batterieladezustand geladen, sofern die Traktionsbatterie im Zuge des ersten Ladevorgangs auf den zweiten Batterieladezustand geladen wurde. Andernfalls wird die Traktionsbatterie im Zuge des zweiten Ladevorgangs von demjenigen Batterieladezustand auf den ersten Batterieladezustand geladen, welchen die Traktionsbatterie beim Anschließen an die Ladestation aufgewiesen hat.

Gemäß einer ersten Variante des Verfahrens wird der Startzeitpunkt des zweiten Ladevorgangs in Abhängigkeit eines bestimmten (prognostizierten) Abfahrtszeitpunkts sowie in Abhängigkeit des ersten Soll-Werts eingestellt. Weiterhin wird zur Bestimmung des Startzeitpunktes ebenfalls der zweite Soll-Wert bzw. derjenige (Anschluss-)Batterieladezustand herangezogen, welchen die Traktionsbatterie beim Anschließen an die Ladestation aufgewiesen hat. Insbesondere ergibt sich der Startzeitpunkt anhand einer notwendigen Zeitdauer zum Laden der Traktionsbatterie vom zweiten und auf den ersten Batterieladezustand bzw. zum Laden vom (Anschluss-)Batterieladezustand auf den ersten Batterieladezustand. Insbesondere ist diese Zeitdauer weiterhin von einer von der Ladestation bereitstellbaren Ladeleistung, von einer beispielsweise von einen Batteriemanagementsystem vorgegebenen Beschränkung für die Ladeleistung, und/oder von der Umgebungstemperatur abhängig.

Besonders bevorzugt wird dabei der Startzeitpunkt des zweiten Ladevorgangs derart eingestellt, dass die eingangs erwähnten Alterungsprozesse möglichst vermieden bzw. zumindest reduziert werden. Hierzu wird insbesondere die Zeitdauer zwischen dem Ende des ersten Ladevorgangs und dem Startzeitpunkt des zweiten Ladevorgangs maximiert und/oder ein anhand dieser Zeitdauer und dem Betrag des zweiten Batterieladezustands ermittelbarer Alterungsparameter, welcher die Alterungsprozesse der Traktionsbatterie charakterisiert, minimiert. Zweckmäßigerweise ist dabei der zweite Ladevorgang zeitlich derart verzögert, dass das Ende des zweiten Ladevorgangs mit dem ermittelten Abfahrtszeitpunkt übereinstimmt und die Traktionsbatterie auf den ersten Batterieladezustand geladen ist.

Gemäß einer zweiten Variante des Verfahrens wird der zweite Ladevorgang aufgrund eines Start-Signals gestartet, welches infolge einer Interaktion des Benutzers des Kraftfahrzeugs mit einem Endgerät von diesem Endgerät ausgegeben wird. Insbesondere wird hierzu das Start-Signal an die Ladevorrichtung übermittelt und von der Ladevorrichtung der zweite Ladevorgang der Traktionsbatterie eingeleitet. Zusammenfassend wird das Starten des zweiten Ladevorgangs also aufgrund einer tatsächlichen Handlung und nicht auf einer prognostizierten des Benutzers bewirkt. Zweckmäßigerweise wird zusätzlich der (voraussichtliche) Abfahrtszeitpunkt ermittelt und der der zweite Ladevorgang, insbesondere der Ladestrom, derart eingestellt, dass das Ende des zweiten Ladevorgangs mit dem ermittelten Abfahrtszeitpunkt übereinstimmt und die Traktionsbatterie auf den ersten Batterieladezustand geladen ist.

Unter einem (Daten-)Endgerät ist hierbei eine Vorrichtung zu verstehen, welches an einem Netzabschluss eines Telekommunikationsnetzes, beispielsweise des Internets, anschließbar ist. Unter einem Endgerät ist insbesondere auch ein mobiles Endgerät wie ein Smartphone, ein Tablett, ein Laptop oder dergleichen zu verstehen. Allenfalls ist das Endgerät signalübertragungstechnisch mit der Ladevorrichtung koppelbar. Diese Kopplung erfolgt dabei beispielsweise unmittelbar, d.h. das Start-Signal wird direkt vom Endgerät an die Ladevorrichtung übermittelt. Alternativ erfolgt die Übertragung des Start-Signals mittelbar, beispielsweise mittels eines Backends des Fahrzeugherstellers, welches wiederum mit der Ladevorrichtung signalübertragungstechnisch koppelbar ist, oder mittels einer zentralen Steuereinheit eines sogenannten Smart-Home-Systems.

Bei beiden Varianten des Verfahrens ist der zweite Batterieladezustand kleiner als der erste Batterieladezustand. Mit anderen Worten ist die in der Traktionsbatterie gespeicherte Energiemenge im zweiten Batterieladezustand kleiner als im ersten Batterieladezustand. Insbesondere ist somit der zweite Batterieladezustand kleiner als der zu Fahrtbeginn vom Benutzer gewünschte erste Batterieladezustand. Infolgedessen ist die kalendarische Alterung aufgrund eines vergleichsweise hohen Batterieladezustand für diejenige Zeitdauer, in welcher der Batterieladezustand kleiner ist, als der erste Batterieladezustand vermieden oder zumindest verringert. Zusammenfassend werden also Standzeiten des Kraftfahrzeugs vermieden, während deren die Traktionsbatterie einen vergleichsweise hohen Batterieladezustand aufweist.

Weiterhin ist aufgrund des Einstellens des Startzeitpunkts des zweiten Ladevorgangs in Abhängigkeit des bestimmten Abfahrtszeitpunkts und des ersten Soll-Wertes bzw. aufgrund des Startens des zweiten Ladevorgangs infolge eines Start-Signals die Zeitdauer zwischen dem Ende des ersten Ladevorgangs bzw. vom Zeitpunkt des Anschließen der Traktionsbatterie an die Ladestation, sofern diese nicht auf den zweiten Batterieladezustand geladen wird, und dem Startzeitpunkt des zweiten Ladevorgangs vergleichsweise lange. Folglich ist vorteilhafterweise auch die kalendarische Alterung der Traktionsbatterie für diese vergleichsweise lange Zeitdauer vermieden oder zumindest verringert.

Beispielsweise ist der zweite Soll-Wert vorgegeben. Gemäß einer vorteilhaften Weiterbildung beider Varianten des Verfahrens jedoch wird der zweite Soll-Wert in Abhängigkeit des ersten Soll-Werts bestimmt. Im Vergleich zu einem konstant vorgegebenen zweiten Soll-Wert ist es auf diese Weise ermöglicht, den zweiten Soll-Wert und damit einhergehend den zweiten Batterieladezustand zu verringern, insbesondere zu minimieren, und folglich die Alterungsprozesse weiter zu vermeiden. Geeigneterweise ist der zweite Soll-Wert bei einem vergleichsweise kleinen ersten Soll-Wert reduziert.

Beim Verfahren gemäß der ersten Variante erfolgt die Bestimmung des zweiten Soll-Wertes zusätzlich oder alternativ in Abhängigkeit des bestimmten (prognostizierten) Abfahrtszeitpunkts. Beim Verfahren gemäß der zweiten Variante wird zusätzlich oder alternativ zunächst der Abfahrtszeitpunkt bestimmt (prognostiziert) und anschließend in Abhängigkeit dessen der zweite Soll-Wert bestimmt. Der zweite Soll-Wert und entsprechend der zweite Batterieladezustand wird zweckmäßigerweise derart bestimmt und zweckmäßigerweise anschließend vorgegeben, dass die Zeitdauer zwischen dem Ende des ersten Ladevorgangs und dem Startzeitpunkt des zweiten Ladevorgangs maximiert, der Betrag des zweiten Batterieladezustands minimiert und/oder ein anhand dieser Zeitdauer und dem, insbesondere minimierten, Betrag des zweiten Batterieladezustands ermittelbarer Alterungsparameter, welcher die Alterungsprozesse der Traktionsbatterie charakterisiert, minimiert. Insbesondere ist der zweite Soll-Wert bei einer vergleichsweise langen Zeitdauer zwischen Zeitpunkt des Anschließens der Traktionsbatterie an die Ladestation und dem ermittelten Abfahrtszeitpunkt geeigneterweise reduziert.

Beispielsweise ist für den zweiten Soll-Wert ein Mindestbetrag vorgesehen, so dass das Kraftfahrzeug auch vor dem Abschließen des zweiten Ladevorgangs vom Benutzer mit einer zumindest dem Mindestbetrag entsprechenden Mindestreichweite verwendet werden kann.

Gemäß einer geeigneten Ausgestaltung werden zur Bestimmung des Abfahrtszeitpunkts Daten vorangegangener tatsächlicher Abfahrtszeitpunkte und/oder Informationen vorangegangener Start-Signale herangezogen. Diese Daten und Informationen werden auch als historische Daten bzw. historische Informationen bezeichnet. Mittels diesen Daten und Informationen sind zur Bestimmung des (prognostizierten) Abfahrtszeitpunkts Gewohnheiten des Benutzers berücksichtigbar und somit der Abfahrtszeitpunkt vergleichsweise genau bestimmbar. Insbesondere wird zur Prognose des Abfahrtszeitpunkts ein typischer oder mittlerer Abfahrtszeitpunkt der vorangegangenen tatsächlichen Abfahrtszeitpunkte herangezogen oder alternativ hierzu eine typische oder eine mittlere Zeitdauer zwischen dem Zeitpunkt der Übermittlung des Start-Signals und den entsprechenden tatsächlichen Abfahrtszeitpunkten herangezogen.

Gemäß einer vorteilhaften Weiterbildung wird im Zuge des Ladens auf den zweiten Batterieladezustand, also im Zuge des ersten Ladevorgangs, im Zuge des Ladens auf den ersten Batterieladezustand, also im Zuge des zweiten Ladevorgangs, und/oder zeitlich zwischen diesen Ladevorgängen die Temperatur der Traktionsbatterie derart eingestellt, dass eine vorgegebene oder vorgebbare Maximaltemperatur nicht überschritten wird. Hierzu wird beispielsweise ein Ladestrom entsprechend eingestellt und zusätzlich oder alternativ eine Kühlungseinrichtung des Kraftfahrzeugs zum Kühlen der Traktionsbatterie verwendet. Folglich ist die kalendarische Alterung aufgrund einer vergleichsweise hohen Temperatur vorteilhaft vermieden oder zumindest verringert.

Gemäß einer vorteilhaften Ausgestaltung ist die Ladevorrichtung zum Laden der Traktionsbatterie des elektrisch angetriebenen Kraftfahrzeugs gemäß dem Verfahren nach in einer der oben dargestellten Ausführungen vorgesehen und eingerichtet. Hierzu weist die Ladevorrichtung eine Messeinrichtung zum Erfassen des (aktuellen) Batterieladezustandes der Traktionsbatterie des Kraftfahrzeugs auf. Des Weiteren weist die Ladevorrichtung eine Steuereinheit zur Steuerung des ersten Ladevorgangs und/oder zur Steuerung des zweiten Ladenvorgangs auf. Dabei ist die Steuereinheit sowohl schaltungs- als auch programmierungstechnisch dazu eingerichtet, dass die Traktionsbatterie gemäß dem oben dargestellten Verfahren geladen wird. Insbesondere ist die Steuereinheit zum Starten des zweiten Ladevorgangs, insbesondere aufgrund der Bestimmung des Startzeitpunktes anhand der des ersten Soll-Wertes und der bestimmten Abfahrtszeit bzw. aufgrund des Start-Signals, sowie zum Bestimmen des zweiten Soll-Wertes vorgesehen und eingerichtet.

Sofern die Ladevorrichtung zum Laden der Traktionsbatterie gemäß dem Verfahrens nach der zweiten Variante vorgesehen ist, wonach der zweite Ladevorgang aufgrund eines Start-Signals gestartet wird, weist die Ladevorrichtung zweckmäßigerweise einen Empfänger, beispielsweise eine sogenannte online-connected-Unit (OCU), für das Start-Signal auf.

Beispielsweise weist die Ladevorrichtung weiterhin einen Temperatursensor oder eine Schnittstelle zu einem solchen auf, so dass die Temperatur der Traktionsbatterie erfasst und der Ladestrom oder eine Kühlungseinrichtung entsprechend eingestellt bzw. betrieben wird.

Gemäß einer zweckmäßigen Weiterbildung weist ein elektrisch angetriebenes Kraftfahrzeug eine Ladevorrichtung in einer der oben dargestellten Varianten auf. Alternativ hierzu ist die Ladevorrichtung Bestandteil der Ladestation, mit anderen Worten ist die Ladevorrichtung dann in die Ladestation integriert.

Nachfolgend werden Ausführungsbeispiele der Erfindung anhand einer Zeichnung näher erläutert. Darin zeigen:

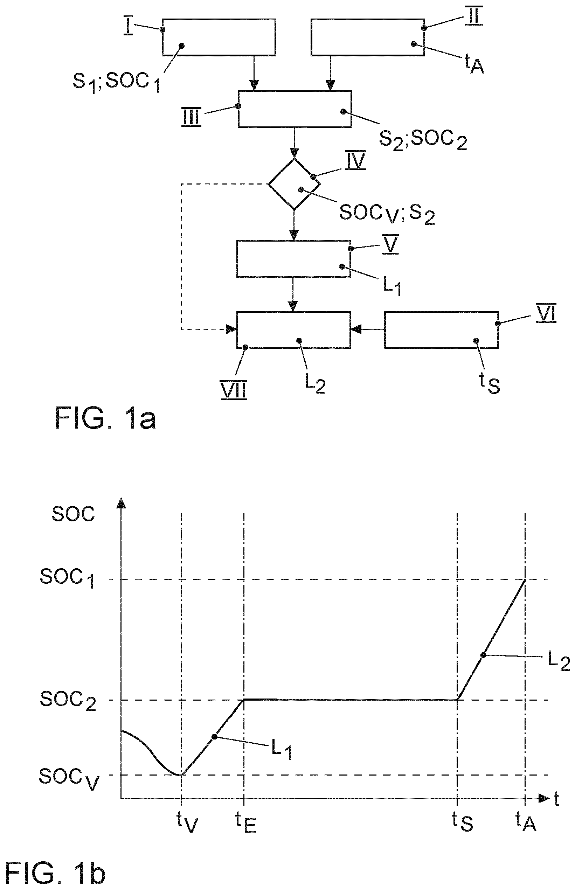

- Fig. 1a: ein Flussdiagramm, welches eine erste Variante eines Verfahrens zum Laden einer Traktionsbatterie eines elektrisch angetriebenen Kraftfahrzeugs repräsentiert, wobei die Traktionsbatterie zunächst auf einen zweiten Batterieladezustand geladen wird, wobei ein Startzeitpunkt für einen zweiten Ladevorgang bestimmt und der zweite Ladevorgang zu diesem Startzeitpunkt gestartet wird,
- Fig. 1: b ein Zeit-Batterieladezustand-Diagramm für das Laden einer Traktionsbatterie gemäß der ersten Variante des Verfahrens,
- Fig. 2a: ein Flussdiagramm, welches eine zweite Variante des Verfahrens zum Laden der Traktionsbatterie des elektrisch angetriebenen Kraftfahrzeugs repräsentiert, wobei die Traktionsbatterie zunächst auf den zweiten Batterieladezustand geladen wird, und wobei der zweite Ladevorgang infolge eines Start-Signals gestartet wird,
- Fig. 2b: ein Zeit-Batterieladezustand-Diagramm für das Laden der Traktionsbatterie gemäß der zweiten Variante des Verfahrens, und
- Fig. 3: ein elektrisch angetriebenes Kraftfahrzeug mit der Traktionsbatterie und mit einer mit dieser verbundenen Ladevorrichtung, wobei die Ladevorrichtung an eine Ladestation angeschlossen ist und einen Empfänger zur signalübertragungstechnischen Kopplung mit einem Endgerät aufweist.

Einander entsprechende Teile und Größen sind in allen Figuren stets mit gleichen Bezugszeichen versehen.

In der Fig. 1a ist ein Flussdiagramm dargestellt, welches eine erste Variante eines Verfahrens zum Laden einer Traktionsbatterie 2 eines elektrisch angetriebenen Kraftfahrzeugs 4 darstellt. In der Fig. 1b ist ein hierzu korrespondierendes Zeit-Batterieladezustand-Diagramm gezeigt, wobei die Zeit t gegen die Abszissenachse und der Batterieladezustand SOC der Traktionsbatterie 2 gegen aufgetragen ist.

Hierbei wird zunächst in einem ersten Schritt I ein erster Soll-Wert S₁ für einen ersten Batterieladezustand SOC₁ vorgegeben, welchen die Traktionsbatterie 2 zu Fahrtbeginn aufweisen soll. Dieser beträgt beispielsweise 80%. Dieser erste Soll-Wert S₁ wird von einem Benutzer vorgegeben oder anhand einer Vorgabe oder Eingabe des Benutzers, beispielsweise einer vom Benutzer gewünschten Reichweite oder der Wahl eines Betriebsmodus des Kraftfahrzeugs 4, wie einem Betriebsmodus für das tägliche Nutzen, ermittelt und anschließend vorgegeben.

In einem zweiten Schritt II wird ein (voraussichtlicher) Abfahrtszeitpunkt t_{A} des Kraftfahrzeugs 4 bestimmt (prognostiziert). Hierzu werden Daten vorangegangener tatsächlicher Abfahrtszeitpunkte herangezogen, wobei eine typische oder mittlere Abfahrtszeit der vorangegangenen tatsächlichen Abfahrtszeitpunkte bestimmt und als bestimmter Abfahrtszeitpunkt t_{A} herangezogen wird.

Anhand des ersten Soll-Wertes S₁ und des prognostizierten (bestimmten) Abfahrtszeitpunkt t_{A} wird in einem weiteren dritten Schritt III ein zweiter Soll-Wert S₂ für einen zweiten Batterieladezustand SOC₂ ermittelt, auf welchen die Traktionsbatterie 2 zunächst geladen werden soll. Der zweite Batterieladezustand SOC₂ ist dabei kleiner als der dem ersten Soll-Wert entsprechende erste Batterieladezustand SOC₁.

Wie in der Fig. 1b dargestellt ist, wird das Kraftfahrzeug 4 - und somit die Traktionsbatterie 2 - zum Zeitpunkt t_{V} an eine Ladestation 6 angeschlossen, also mit dieser verbunden. Der Batterieladezustand SOCv zu diesem Zeitpunkt t_{V} wird mit dem zweiten Soll-Wert S₂ verglichen (vierter Schritt IV). Sofern zum Zeitpunkt t_{V} der Batterieladezustand SOC_{V} kleiner als der zweite Soll-Wert S₂ ist, wird die Traktionsbatterie 2 in einem ersten Ladevorgang L₁ auf den zweiten Batterieladezustand SOC₂ geladen (fünfter Schritt V). Der erste Ladevorgang L₁ endet zum Zeitpunkt t_{E}. Beispielsweise beträgt der zweite Batterieladezustand 50%.

In einem weiteren (sechsten) Schritt VI wird ein Startzeitpunkt t_{S} für einen zweiten Ladevorgang L₂ der bestimmt. Der Startzeitpunkt t_{S} wird dabei derart bestimmt, dass die Traktionsbatterie 2 aufgrund des zweiten Ladevorgangs L₂ möglichst exakt zum prognostizierten Abfahrtszeitpunkt t_{A} den ersten Batterieladezustand SOC₁ aufweist. Dabei ergibt sich der Startzeitpunkt t_{S} anhand der prognostizierten Abfahrtszeit t_{A} und einer notwendigen Zeitdauer zum Laden der Traktionsbatterie 2 vom dem zweiten Soll-Wert S₂ entsprechenden zweiten Batterieladezustand SOC₂ und auf den dem ersten Soll-Wert S₁ entsprechenden ersten Batterieladezustand SOC₁ bzw. zum Laden vom Batterieladezustand SOC_{V} auf den ersten Batterieladezustand SOC₁, sofern die Traktionsbatterie 2 nicht im vierten Schritt IV auf den zweiten Batterieladezustand SOC₂ geladen wurde. Zusammenfassend wird der Startzeitpunkt t_{S} also in Abhängigkeit des bestimmten (prognostizierten) Abfahrtszeitpunkts t_{A} sowie in Abhängigkeit des ersten Soll-Werts S₁ bestimmt und eingestellt.

In einem siebten Schritt VII erfolgt der zweite Ladevorgang L₂. Dabei wird die Traktionsbatterie 2 entsprechend vom zweiten Batterieladezustand SOC₂ auf den ersten Batterieladezustand SOC₁ geladen bzw. vom Batterieladezustand SOC_{V} zum Zeitpunkt t_{V} auf den ersten Batterieladezustand SOC₁ geladen, was in der Fig. 1a strichliniert dargestellt ist.

Zusammenfassend wird die Traktionsbatterie 2 nicht direkt auf den ersten Batterieladezustand SOC₁ geladen. Vielmehr wird die Traktionsbatterie 2 zunächst auf den im Vergleich zum ersten Batterieladezustand SOC₁ kleineren zweiten Batterieladezustand SOC₂ geladen, so dass eine Zeitdauer des Kraftfahrzeugs mit vergleichsweise hohem Batterieladezustand vermieden ist. Folglich ist eine kalendarische Alterung der Traktionsbatterie ebenfalls vermieden oder zumindest verringert.

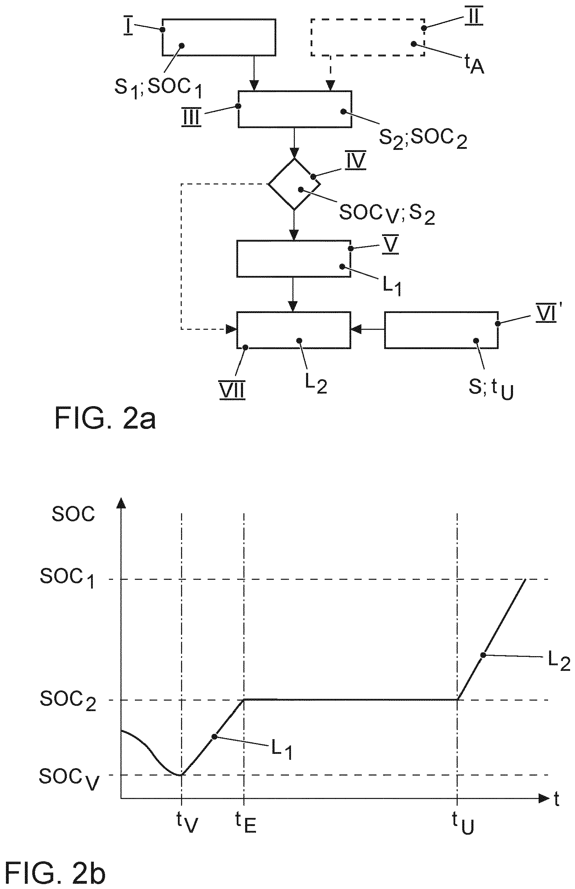

In de Fig. 2a ist ein Flussdiagramm dargestellt, welches eine zweite Variante des Verfahrens zum Laden der Traktionsbatterie 2 und in der Fig. 2b ein hierzu korrespondierendes Zeit-Batterieladezustand-Diagramm gezeigt. Die Schritte I bis einschließlich IV und gegebenenfalls Schritt V erfolgen hierbei analog zur ersten Variante gemäß der Figuren 1a und 1b.

Gemäß einer alternativen Ausgestaltung der zweiten Variante des Verfahrens erfolgt die Bestimmung des zweiten Soll-Wertes S₂ in Schritt III lediglich in Abhängigkeit des ersten Soll-Wertes S₁, also nicht in Abhängigkeit der prognostizierten Abfahrtszeit t_{A}. Folglich ist auch Schritt II, also die Prognose der (voraussichtlichen) Abfahrtszeit t_{A} nicht notwendig, weshalb dieser Schritt in der Fig. 2a strichliniert dargestellt ist.

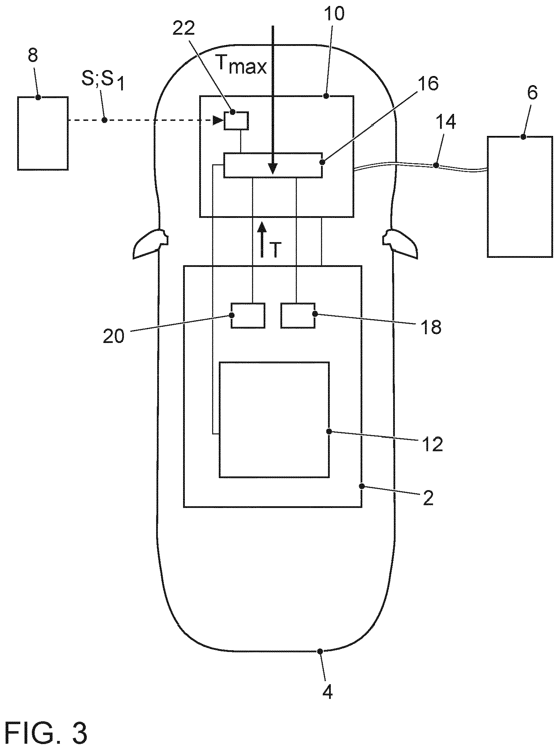

In Schritt VI' erfolgt eine Interaktion eines Benutzers des Kraftfahrzeugs 4 mit einem Endgerät 8 (vgl. Fig. 3), infolgedessen ein Start-Signal S vom Endgerät 8 ausgegeben und an eine Ladevorrichtung 10 übertragen wird. Wie in der Fig. 2b erkennbar ist, wird dieses Start-Signal S zum Zeitpunkt t_{U} von der Ladevorrichtung 10 empfangen und der Start des zweiten Ladevorgangs L₂ bewirkt, mit anderen Worten eingeleitet. Die Traktionsbatterie 2 wird auf den ersten Batterieladezustand SOC₁ geladen (Schritt VII). Also wird die Traktionsbatterie 2 zeitlich direkt auf den Empfang des Start-Signals S folgend vom zweiten Batterieladezustand SOC₂ bzw. vom Batterieladezustand SOC_{V} auf den ersten Batterieladezustand SOC₁ geladen.

Bei beiden Varianten des Verfahrens, wird die Temperatur T der Traktionsbatterie 2 im Zuge des ersten Ladevorgangs L₁, im Zuge des zweiten Ladevorgangs L₂ sowie im zeitlich zwischen diesen beiden Ladevorgängen, also zwischen dem Zeitpunkt t_{E} und dem Zeitpunkt t_{A} bzw. t_{U}, erfasst. Zur Vermeidung der kalendarischen Alterung der Traktionsbatterie 2 aufgrund einer vergleichsweise hohen Temperatur, wird die Temperatur T der Traktionsbatterie 2 derart eingestellt, dass eine vorgegebene oder vorgebbare Maximaltemperatur Tₘₐₓ, beispielsweise 22°C, nicht überschritten wird. Hierzu wird ein Ladestrom zum Laden der Traktionsbatterie 2 entsprechend gewählt und zusätzlich oder alternativ eine Kühlungseinrichtung 12 für die Traktionsbatterie 2 aktiviert (vgl. Fig. 3).

In der Fig. 3 ist das elektrisch angetriebene Kraftfahrzeug 4 dargestellt. Dieses weist die Traktionsbatterie 2 auf, welche mit der Ladevorrichtung 10 des Kraftfahrzeugs 4 verbunden ist. Dabei ist die Ladevorrichtung 10 dazu eingerichtet, dass die Traktionsbatterie 2 gemäß einer der Varianten des Verfahrens nach den Fig. 1a bis 2b geladen wird. Das Kraftfahrzeug 4 und insbesondere deren Ladevorrichtung 10 ist hierzu mittels eines Ladekabels 14 an Ladestation 6 angeschlossen, welche hier beispielhaft als eine Ladesäule ausgebildet ist. Dabei stellt die Ladestation 6 eine zum Laden der Traktionsbatterie 2 geeignete Ladespannung bzw. einen hierzu geeigneten Ladestrom bereit. Weiterhin weist die Ladevorrichtung 10 eine Steuereinheit 16 auf. Diese regelt oder steuert dabei den Betrag und den zeitlichen Verlauf des der Traktionsbatterie 2 zugeführten Ladestroms bzw. entsprechend der an der Traktionsbatterie 2 anliegenden Ladespannung. Zusammenfassend steuert die Steuereinheit 16 den ersten und den zweiten Ladevorgang L₁ und L₂.

Die Ladevorrichtung 10 weist des Weiteren eine Messeinheit 18 auf, mittels welcher der Batterieladezustand SOC der Traktionsbatterie 2 erfassbar ist.

Das Kraftfahrzeug 4 weist die Kühlungseinrichtung 12 auf, mittels welcher die Traktionsbatterie 2 gekühlt werden kann, so dass die Maximaltemperatur Tₘₐₓ nicht überschritten wird. Die Kühlungseinrichtung 12 ist dabei von der Steuereinrichtung 16 ansteuerbar, wobei auf der Steuereinheit die Maximaltemperatur Tₘₐₓ hinterlegt ist, und wobei die Steuereinheit 16 zum Erfassen der Temperatur T der Traktionsbatterie 2 mit einem Temperatursensor 20 verbunden ist.

Die Ladevorrichtung 10 umfasst weiterhin einen mit der Steuereinheit 16 verbundenen Empfänger 22 zum Empfang des vom Endgerät 8 ausgegebenen Start-Signals S. Insbesondere weist das Endgerät 8 eine Funktionalität auf, welche zusätzlich zum Einleiten des zweiten Ladevorgangs L₂ vorgesehen ist. Beispielsweise ist das Endgerät 8 ein Smartphone, welches bei Interaktion des Benutzers mit dem Endgerät 8, beispielhaft beim Ausschalten einer Wecker-Funktion, eine sogenannte Push-Nachricht als Start-Signal S ausgibt und an den Empfänger 22 überträgt.

Weiterhin wird mittels des Endgeräts 8 vom nicht weiter dargestellten Benutzer der erste Soll-Wert S₁ vorgegeben und an die Ladevorrichtung 10 übertragen.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Traktionsbatterie
- 4: Kraftfahrzeug
- 6: Ladestation
- 8: Endgerät
- 10: Ladevorrichtung
- 12: Kühlungseinrichtung
- 14: Ladekabel
- 16: Steuereinheit
- 18: Messeinrichtung
- 20: Temperatursensor
- 22: Empfänger
- I: Vorgeben des ersten Soll-Wertes
- II: Bestimmen des Abfahrtszeitpunkt
- III: Bestimmen des zweiten Soll-Wertes
- IV: Vergleichen des zweiten Soll-Wertes mit dem Batterieladezustand
- V: erster Ladevorgang
- VI: Bestimmen des Startzeitpunkt des ersten Ladevorgangs
- VI': Ausgabe des Start-Signals
- VII: zweiter Ladevorgang
- L₁: erster Ladevorgang
- L₂: zweiter Ladevorgang
- S: Start-Signal
- S₁: erster Soll-Wert
- S₂: zweiter Soll-Wert
- SOC: Batterieladezustand
- SOC_{V}: Batterieladezustand zum Zeitpunkt t_{V}
- SOC₁: erster Batterieladezustand
- SOC₂: zweiter Batterieladezustand
- t: Zeit
- t_{A}: Abfahrtszeitpunkt
- t_{E}: Endzeitpunkt des ersten Ladevorgangs
- t_{S}: Startzeitpunkt des zweiten Ladevorgangs
- t_{U}: Zeitpunkt des Empfangs des Start-Signals
- t_{V}: Zeitpunkt des Anschließens der Ladevorrichtung an die Ladestation
- T: Temperatur der Traktionsbatterie
- Tₘₐₓ: Maximaltemperatur der Traktionsbatterie

## Patentansprüche

1. Verfahren zum Laden einer Traktionsbatterie (2) eines elektrisch angetriebenen Kraftfahrzeugs (4),
- bei dem ein erster Soll-Wert (S₁) für einen ersten Batterieladezustand (SOC₁) für einen Fahrtbeginn des Kraftfahrzeugs (4) vorgegeben wird,
- bei dem die Traktionsbatterie, sofern deren Batterieladezustand (SOC_{V}) kleiner als ein zweiter Soll-Wert (S₂) ist, zur Vermeidung von Alterungsprozessen in einem ersten Ladevorgang (L₁) auf einen dem zweiten Soll-Wert (S₂) entsprechenden zweiten Batterieladezustand (SOC₂) geladen wird, welcher kleiner ist als der erste Batterieladezustand (SOC₁), und
- bei dem die Traktionsbatterie (2) in einem zweiten Ladevorgang (L₂) auf den ersten Batterieladezustand (SOC₁) geladen wird,
- wobei der Startzeitpunkt (t_{S}) des zweiten Ladevorgangs (L₂) in Abhängigkeit eines bestimmten Abfahrtszeitpunkt (t_{A}), des ersten Soll-Wertes (S₁) und des zweiten Soll-Wertes (S₂) eingestellt wird, oder
- wobei der zweite Ladevorgang (L₂) aufgrund eines Start-Signals (S) gestartet wird, welches infolge einer Interaktion des Benutzers mit einem Endgerät (8) von diesem ausgegeben wird.

2. Verfahren nach Anspruch 1,
**dadurch gekennzeichnet,**
**dass** der zweite Soll-Wert (S₂) in Abhängigkeit des ersten Soll-Wertes (S₁) und/oder in Abhängigkeit des oder eines bestimmten Abfahrtszeitpunkts (t_{A}) bestimmt wird.

3. Verfahren nach Anspruch 1 oder 2,
**dadurch gekennzeichnet,**
**dass** zur Bestimmung des Abfahrtszeitpunkts (t_{A}) Daten vorangegangener Abfahrtszeitpunkte und/oder Informationen vorangegangener Start-Signale herangezogen werden.

4. Verfahren nach einem der Ansprüche 1 bis 3,
**dadurch gekennzeichnet,**
**dass** zur Vermeidung von Alterungsprozessen der Traktionsbatterie (2) deren Temperatur (T) im Zuge des Ladens auf den zweiten Batterieladezustand (SOC₂), im Zuge des Ladens auf den ersten Batterieladezustand (SOC₁) und/oder zeitlich zwischen diesen Ladevorgängen derart eingestellt wird, dass eine vorgegebene oder vorgebbare Maximaltemperatur (Tₘₐₓ) nicht überschritten wird.

5. Ladevorrichtung (10) zum Laden einer Traktionsbatterie (2) eines elektrisch angetriebenen Kraftfahrzeugs (4) gemäß dem Verfahren nach einem der Ansprüche 1 bis 4, aufweisend
- eine Messeinrichtung (18) zum Erfassen des Batterieladezustandes (SOCA) der Traktionsbatterie (2) des Kraftfahrzeugs (4), und
- eine Steuereinheit (16) zur Steuerung des ersten Ladevorgangs (L₁) und/oder zur Steuerung des zweiten Ladenvorgangs (L₂).

6. Kraftfahrzeug (4) mit einer Ladevorrichtung (10) nach Anspruch 5.
